# FASCICULE DE BREVET EUROPEEN

(11) **EP 1 718 186 B1**
(45) Date de publication et mention de la délivrance du brevet: **15.08.2007**
(21) Numéro de dépôt: 05717582.0
(22) Date de dépôt: 08.02.2005
(51) Int. Cl.: A45D 40/10

(54) **DISTRIBUTEUR DE PRODUIT COSMETIQUE, HYGIENIQUE OU PHARMACEUTIQUE**
SPENDER FÜR EINE KOSMETISCHE, REINIGUNGS- ODER PHARMAZEUTISCHE ZUSAMMENSETZUNG
DISPENSER FOR A COSMETIC, CLEANSING OR PHARMACEUTICAL COMPOSITION

(30) Priorité: 11.02.2004 FR 0401377
(43) Date de publication de la demande: 08.11.2006
(73) Titulaire: Chanel Parfums Beauté, 92200 Neuilly-sur-Seine (FR)
(72) Inventeur: DOMY, Michel, F-74960 Cran Gevrier (FR); MERMOUD, Pierre, F-74270 Frangy (FR)
(74) Mandataire: Breese Derambure Majerowicz
(86) Numéro de dépôt international: PCT/FR2005/000280
(87) Numéro de publication internationale: WO 2005/079622

(56) Documents cités:
- GB-A- 834 486
- US-A- 1 290 164
- US-A- 2 485 161
- US-A- 2 552 714

## Description

L'invention est relative à un distributeur de produit cosmétique, hygiénique ou pharmaceutique, en particulier mais de manière non-exclusive, à un emballage pour fard à lèvres en bâton.

On connaît des emballages de distribution pour bâtons de fard à lèvres en deux parties, comportant un corps présentant un volume intérieur tubulaire de logement du bâton de fard à lèvres, ouvert à une extrémité axiale, et un étui permettant de fermer cette extrémité axiale. Le corps est habituellement muni d'une tête pivotant par rapport à l'axe de symétrie du corps et d'un mécanisme d'extraction permettant d'extraire le bâton de fard à lèvres lorsque la tête pivote par rapport au corps.

Dans le document GB 859 838 est décrit un étui de fard à lèvre associé à un miroir. L'étui est monté sur une charnière du cadre du miroir et forme un cylindre de guidage d'un piston pourvu de languettes venant pincer latéralement le tube de fard à lèvres. Le fond de l'étui est pourvu d'un ressort d'éjection qui repousse le piston. L'axe d'éjection de l'étui est parallèle à l'axe de la charnière du cadre du miroir. Lorsque l'étui est rabattu sur le miroir, la base du tube de fard à lèvres repose sur une coupelle fixée au cadre du miroir. Lorsque l'on pivote le miroir, le piston est libéré et entraîne le tube, alors que se détend le ressort. Le tube reste maintenu par les languettes dans la position d'éjection, ce qui permet une prise en main sans risque de faire tomber le tube. Ce principe est difficilement transposable à un tube qui serait présenté sans miroir associé car la libération du tube de fard à lèvre est directement provoquée par le mouvement de la coupelle associée au miroir.

Par ailleurs est décrit dans le document US 2,552,714 un boîtier combiné pour fard à lèvre et pinceau applicateur, dont l'étui est subdivisé en deux parties : un étui rigide fin destiné à recevoir le pinceau et un étui déformable destiné à recevoir le tube de fard à lèvres, lui-même pourvu d'ergots de maintien radiaux. Une paroi pourvue d'une fente sépare les deux étuis. L'applicateur est muni d'un coulisseau qui est guidé dans la fente et vient en appui contre le tube de fard à lèvres. Un ressort rappelle la base de l'applicateur vers une position éjectée. Lorsque, à partir de la position de rangement, l'utilisateur presse la paroi de l'étui dans la direction radiale, il libère les ergots. Le ressort se détend et entraîne simultanément l'applicateur et le tube de fard vers la position éjectée. Il est alors possible à l'utilisateur de saisir le tube de fard et de s'en servir de manière conventionnelle. Toutefois, le tube risque, lors de l'éjection, de tomber car rien ne le retient à l'étui. De plus, le recours à un étui aux parois déformables s'avère peu compatible avec les considérations esthétiques et les valeurs de luxe véhiculées par ce type de produit.

L'invention vise donc à proposer un distributeur pour produit cosmétique, hygiénique ou pharmaceutique limitant le nombre de pièces visibles, et d'un emploi très simple et intuitif.

A cet effet, l'invention a pour objet un distributeur de produit cosmétique, hygiénique ou pharmaceutique, comportant :
- un étui tubulaire définissant un axe géométrique d'éjection et un sens axial d' éjection;
- un sous-ensemble mobile par rapport à l'étui, et comportant un fond et un élément de manoeuvre, le sous-ensemble mobile dans une position de rangement étant entièrement logé à l'intérieur de l'étui de telle manière que l'élément de manoeuvre est inaccessible ;
- un volume de logement du produit défini dans l'étui et/ou le sous-ensemble mobile ; et
- des moyens de verrouillage qui, dans un état de verrouillage, interdisent tout mouvement du sous-ensemble mobile en position de rangement par rapport à l'étui dans le sens d'éjection et, dans un état de déverrouillage, libèrent le sous-ensemble mobile et permettent un mouvement du sous-ensemble mobile par rapport à l'étui dans le sens de l'éjection au moins jusqu'à une position en saillie dans laquelle l'élément de manoeuvre fait saillie à l'extérieur de l'étui et est accessible, les moyens de verrouillage passant de l'état de verrouillage à l'état de déverrouillage lorsque le fond du sous-ensemble mobile est enfoncé par un utilisateur dans le sens axial opposé au sens axial d'éjection, de la position de rangement à une position enfoncée.

La manoeuvre d'éjection est extrêmement simple. Les risques d'éjection intempestive sont réduits, car le mécanisme n'impose pas que la tête ressorte de l'étui.

L'élément de manoeuvre, qui permet l'utilisation du sous-ensemble mobile une fois celui-ci arrivé dans la position en saillie, peut revêtir différentes formes et remplir différentes fonctions. Dans le cas d'un distributeur nécessitant une prise en main du sous-ensemble mobile, notamment en vue de le séparer de l'étui, l'élément de manoeuvre pourra être une partie du fond, par exemple une surface radiale, dédiée à la prise en main du sous-ensemble mobile. L'élément de manoeuvre pourra également comprendre un bouton poussoir de commande d'une valve ou d'une pompe, si le produit à distribuer est sous forme fluide. Il pourra également s'agir d'une languette d'ouverture d'un orifice de distribution du produit.

Préférentiellement, le sous-ensemble mobile est guidé par rapport à l'étui de telle manière que l'enfoncement le fond du sous-ensemble mobile est un mouvement de translation sans rotation par rapport à l'étui. Du point de vue de l'utilisateur, le mouvement de translation est particulièrement simple et intuitif.

Préférentiellement, le distributeur comporte en outre des moyens d'entraînement du sous-ensemble mobile, dans le sens d'éjection, de la position enfoncée vers la position en saillie. Les moyens d'entraînement comportent un ressort de compression rappelant le sous-ensemble mobile dans le sens d'éjection. L'éjection est automatique, de sorte qu'il n'est pas nécessaire de retourner le distributeur tête vers le bas pour accéder aux surfaces de préhension.

Avantageusement, le sous-ensemble mobile peut comporter un applicateur du produit, définissant le volume de logement du produit, et pourvu du fond du sous-ensemble mobile et un équipage mobile disposé à l'intérieur de l'étui et muni de moyens de retenue de l'applicateur par rapport à l'équipage mobile.

L'équipage mobile constitue un sous-ensemble intermédiaire qui reste caché de l'utilisateur et peut supporter au moins une partie des fonctions de verrouillage et/ou de guidage, qui restent cachées à l'utilisateur et permettent de conserver au corps une forme épurée.

De manière préférentielle, une butée de fin de course interdit tout mouvement axial de l'équipage mobile par rapport à l'étui dans le sens d'éjection au-delà de la position prise par l'équipage mobile lorsque le sous-ensemble mobile est dans la position en saillie. La butée assure le maintien de l'équipage mobile à l'intérieur de l'étui.

Préférentiellement, les moyens de retenue sont tels qu'ils libèrent l'applicateur lorsque le sous-ensemble mobile est dans la position en saillie et qu'est exercée sur le fond du sous-ensemble mobile une force axiale dans le sens d'éjection. De manière très simple, les moyens de retenue peuvent être constitués par exemple d'une couronne à déformation radiale élastique ou d'une tulipe de serrage, munie de pattes qui viennent enserrer par déformation élastique l'extrémité axiale du tube, de sorte qu'un simple mouvement de traction suffit à libérer le tube.

Selon un mode de réalisation, les moyens de verrouillage comportent au moins deux pièces mobiles ayant un mouvement relatif télescopique. Ce mouvement relatif télescopique permet, pour un encombrement axial donné en position de rangement, de maximiser la course vers la position de prise en main.

Selon un mode de réalisation particulièrement simple, l'équipage mobile est monobloc. L'équipage mobile monobloc peut ainsi assurer une pluralité de fonctions, par exemple : la fonction de verrouillage, avec des moyens complémentaires solidaires de l'étui, la fonction de maintien du tube, et de coopération avec la butée de fin de course et/ou la fonction de guidage du sous-ensemble mobile par rapport au tube.

Préférentiellement, les moyens de verrouillage comportent au moins un élément mobile coopérant avec une butée dans l'état verrouillé des moyens de verrouillage, l'élément mobile et la butée ayant un mouvement relatif de dégagement comportant une composante non axiale lorsque les moyens de verrouillage passent de l'état de verrouillage à l'état de déverrouillage. Le mouvement relatif de l'élément mobile par rapport à la butée peut être obtenu.

Préférentiellement, l'étui est fermé à une extrémité axiale par un fond d'étui et comporte à l'autre extrémité axiale une ouverture qui est obturée par le fond du sous-ensemble mobile en position de rangement, le sens axial d'éjection allant du fond d'étui vers l'ouverture. En position de rangement, l'aspect du distributeur est particulièrement épuré. Il n'y a pas de risque de méprise sur le mouvement de manoeuvre pour extraire le sous-ensemble mobile de l'étui, car un seul type de mouvement est autorisé.

D'autres avantages et caractéristiques ressortiront plus clairement de la description qui va suivre de modes particuliers de réalisation de l'invention, donnés à titre d'exemples non limitatifs, et représentés aux dessins annexés sur lesquels :
- la figure 1 représente une vue éclatée d'un distributeur de fard à lèvres selon un premier mode de réalisation de l'invention ;
- la figure 2 représente une vue en coupe axiale du distributeur de la figure 1, en position de rangement ;
- La figure 3 représente une vue en coupe axiale du distributeur de la figure 11e distributeur de la figure 1, en position enfoncée ;
- La figure 4 représente le distributeur de la figure 1, en position de préhension ;
- la figure 5 représente un détail d'une came en forme de coeur du distributeur de la figure 1;
- la figure 6 représente une vue éclatée d'un distributeur selon un deuxième mode de réalisation de l'invention ;
- la figure 7 représente une vue en coupe axiale du distributeur de la figure 6, en position de rangement ;
- la figure 8 représente une vue en coupe axiale du distributeur de la figure 6, en position enfoncée ;
- la figure 9 représente une vue en coupe axiale du distributeur de la figure 6, en position de préhension.

Dans la mesure du possible, les signes de références utilisés pour décrire le premier mode de réalisation de l'invention seront également utilisés ultérieurement pour la description de parties identiques ou similaires des autres modes de réalisation.

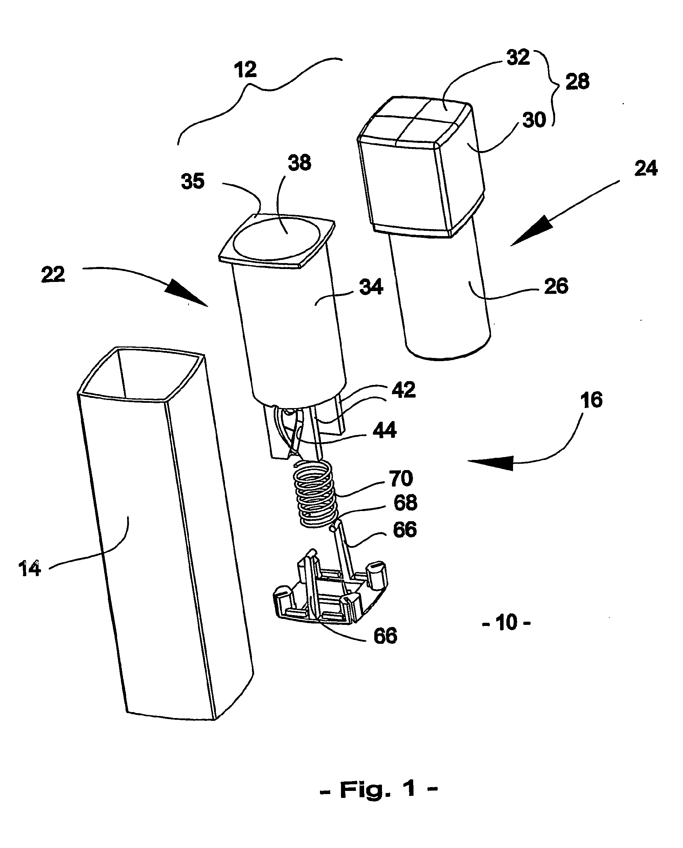

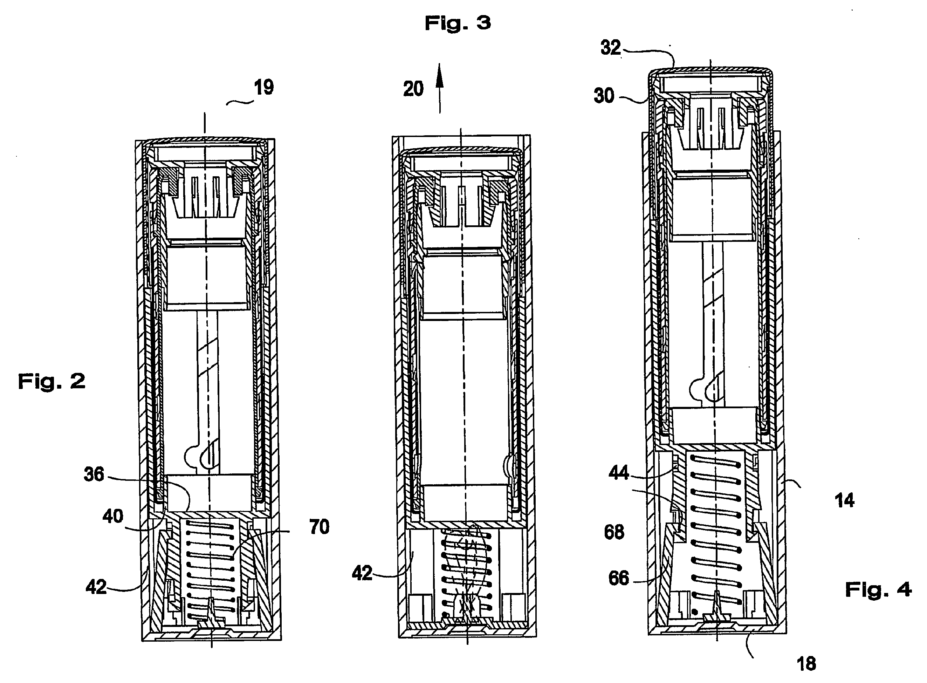

En référence aux figures 1 à 5, un distributeur 10 de fard à lèvres selon un premier mode de réalisation de l'invention est constitué d'un sous-ensemble mobile 12 logé dans un étui 14 à section polygonale et immobilisé dans une position de verrouillage par un mécanisme de verrouillage 16.

L'étui 14 est fermé par un fond 18 à une extrémité axiale, et ouvert à l'extrémité axiale opposée, définissant ainsi un axe d'éjection 19 et un sens d'éjection 20 pour le sous-ensemble mobile 12. Pour simplifier la description, on supposera dans la suite que le distributeur est disposé avec son axe d'éjection vertical et son sens d'éjection vers le haut, mais il est bien clair que le distributeur peut en pratique est utilisé dans toutes les positions.

Le sous-ensemble mobile 12 comprend un équipage mobile 22 supportant un tube de fard à lèvres conventionnel 24. Le tube de fard à lèvres est constitué d'un cylindre 26 de logement du bâton de fard à lèvres (non représenté) ouvert à une extrémité, et fermé par une tête 28 à l'extrémité opposée. La tête 28 comporte un élément de manoeuvre constitué par une surface de préhension radiale 30 et un fond 32. Un mécanisme conventionnel (non représenté) permet d'extraire le bâton de fard à lèvres du cylindre de logement 26 lorsqu'un utilisateur saisit la tête 28 et lui fait subir une rotation par rapport au cylindre 26 suivant l'axe géométrique de ce dernier.

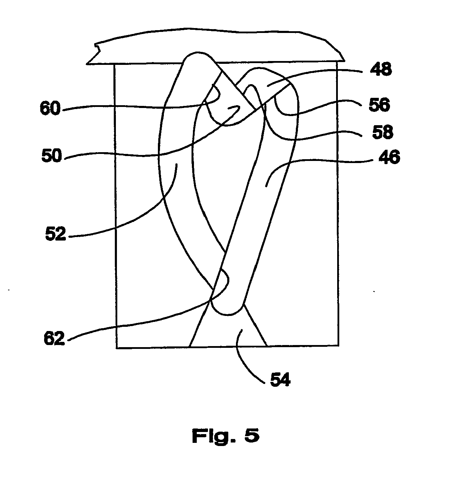

L'équipage mobile 22 est formé par une pièce multifonctions monobloc, constituant une douille cylindrique extérieure de guidage 34 pourvue d'une collerette 35 formant piston de guidage coulissant dans la direction axiale, sans rotation, le long des parois intérieures de l'étui 14, et fermée par une cloison intermédiaire 36 faisant séparation entre un volume de rangement 38 du tube de fard à lèvres et le mécanisme 16. La cloison intermédiaire 36 forme, du côté du volume de rangement, une couronne intérieure 40 de retenue du tube de fard à lèvres 24 et, du côté du mécanisme 16, faisant saillie vers le fond 18 de l'étui, deux flasques inférieurs parallèles 42, symétriques l'un de l'autre par rapport à un plan axial et munis chacun d'une gorge en forme de coeur 44, visible de manière détaillée sur la figure 5. Chaque gorge 44 est étagée et comporte une piste haute 46, une piste semi-haute 48, une piste de repos 50 et une piste basse 52. Une piste de montage 54 est également prévue. Chacune des pistes a une profondeur variable décroissant continûment d'une extrémité à l'autre de la piste, à la manière d'une rampe définissant un point bas et un point haut. Le point haut de chaque piste est situé à proximité du point bas de la piste adjacente, à une profondeur moindre que le point bas de la piste adjacente, de sorte que les pistes sont séparées les unes des autres par des marches 56, 58, 60, 62.

Une pince constituée de deux doigts élastiques 66 est fixée au fond de l'étui. Les extrémités libres des doigts 66 forment des ergots 68 recourbés en direction radiale vers l'intérieur de manière à venir se loger dans la gorge 44. La gorge tend à écarter les doigts l'un de l'autre par rapport à une position de repos, de sorte que les doigts sont en flexion et exercent une force élastique d'appui sur le fond de la gorge 44. De ce fait, les marches 56, 58, 60, 62 constituent des dispositifs anti-retour infranchissables lorsque les extrémités 68 des doigts coulissent au fond de la gorge 44. Un ressort hélicoïdal 70 de compression prend appui sur le fond 18 de l'étui et sur la cloison 36 de l'équipage mobile, tendant à repousser l'équipage mobile 22 dans un sens d'éjection 20 hors de l'étui.

La gorge 44 constitue donc une came en forme de coeur, dont les marches successives imposent aux extrémités ergots 68 un trajet dans le sens inverse des aiguilles d'une montre sur la figure 5. En coopérant avec les ergots 68 et le ressort 70, elle définit un mécanisme 16 bistable conférant au distributeur un cycle de fonctionnement à quatre temps, qui va maintenant être décrit :

Dans la position de rangement, le sous-ensemble mobile 12 constitué du tube de fard à lèvres 24 et de l'équipage mobile 22 se trouve entièrement disposé dans l'étui 14 qui interdit notamment l'accès à la surface de préhension 30 de la tête. Le fond 32 de la tête 28, dont le périmètre s'inscrit avec un très faible jeu dans le périmètre intérieur de l'étui 14, obture l'étui 14. L'extrémité du tube 24 opposée à la tête forme une arête cylindrique qui vient se coincer par emmanchement sur la couronne intérieure 40 de l'équipage mobile, assurant ainsi une solidarisation entre le tube de fard à lèvres 24 et l'équipage mobile 22. Le ressort 70 sollicite l'équipage mobile 22 dans le sens de l'éjection mais les ergots 68 empêchent tout mouvement dans ce sens, car ils se trouvent en appui sur une paroi latérale de la gorge 44, à l'extrémité de la piste de repos 50 pointant vers le fond 18 de l'étui.

Lorsqu'un utilisateur enfonce la tête vers le fond de l'étui en s'opposant au ressort 70, les gorges 44 se déplacent par rapport à l'étui 14. Les ergots 68, qui ne peuvent franchir la marche ascendante 58 séparant la piste de repos de la piste semi-haute, sont guidés jusqu'à l'extrémité de la piste de repos 50 la plus éloignée du fond jusqu'à franchir la marche descendante 60 et se retrouver sur la piste basse 52, la marche 60 interdisant alors tout retour vers la piste de repos 50. Ce faisant, les doigts 66 subissent une flexion vers la gauche sur la figure 3.

Lorsque l'utilisateur relâche sa pression sur la tête 28, le ressort 70 entraîne le sous-ensemble mobile 12 librement dans le sens d'éjection jusqu'à ce que les ergots, ayant parcouru la piste basse 52, franchissent la marche 62 et se retrouvent en butée contre la paroi latérale de la gorge 44, à l'extrémité inférieure de la piste haute 46, sans possibilité de retour. Le mouvement d'éjection est quelque peu freiné par le frottement de la collerette 35, et éventuellement de la douille 34, le long des parois de l'étui 14, de sorte que le mouvement d'éjection est progressif et non impulsionnel. Cet effet, recherché pour l'impression de luxe qu'il confère au dispositif, peut être au besoin accentué en prévoyant une étanchéité imparfaite entre la collerette 35 et les parois de l'étui de sorte que l'égalisation des pressions de part et d'autre de la collerette 35 durant l'éjection ne soit pas instantanée et provoque une dépression légère dans la partie fermée de l'étui. A la fin de cette phase, le sous-ensemble mobile a alors atteint une position de préhension dans laquelle la surface latérale de préhension 30 de la tête du tube est devenue accessible, le tube 24 restant maintenu par serrage sur la couronne 40. Il ne reste à l'utilisateur qu'à saisir la tête 28 par la surface de préhension 30 et à extraire le tube 24 par une légère traction qui libère l'extrémité du tube coincée sur la couronne 40.

Pour remettre le tube 24 en place dans son étui 14, l'utilisateur n'a qu'à enfoncer le tube 24 dans l'étui 14. Le tube 24 vient se coincer sur la couronne 40 tout en repoussant l'équipage mobile 34 vers le fond 18 de l'étui. Les ergots 68, dont le retour vers la piste basse 52 est interdit par la marche 62, parcourent alors la piste haute 46 jusqu'à franchir la marche 56 et buter contre la paroi de la gorge 44 à l'extrémité de la piste mi-haute 48 la plus éloignée du fond 18, ce qui arrête le mouvement de l'équipage mobile. Éventuellement, le tube 24 effectue une légère course supplémentaire pour achever de se coincer dans la couronne 40, alors que l'équipage mobile 22 est devenu stationnaire.

Dès que l'utilisateur relâche sa pression, le sous-ensemble mobile 12 est repoussé par le ressort 70 qui l'entraîne vers la position de verrouillage, les ergots 68 franchissant la marche 58 séparant la piste demi-haute de la piste de repos et venant une nouvelle fois en butée contre la paroi de la gorge, achevant le cycle d'utilisation.

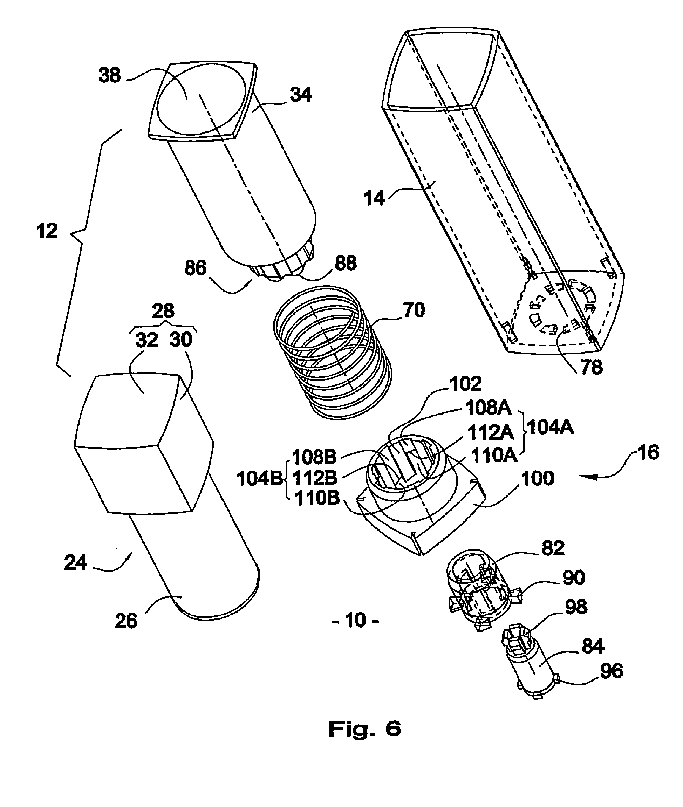

Un deuxième exemple de réalisation de l'invention va maintenant être décrit en référence aux figures 6 à 9. Le distributeur de fard à lèvres comporte un sous-ensemble mobile 12 logé dans un étui 14 et immobilisé dans une position de verrouillage par un mécanisme de verrouillage 16. Une extrémité de l'étui 14 est fermée par un fond 18 pourvu d'une couronne dentée 78 fixe en saillie axiale, dont les dents forment des rampes. L'autre extrémité de l'étui 14 est ouverte.

Le sous-ensemble mobile 12 comporte un équipage mobile supportant un tube de fard à lèvres 24 conventionnel, similaire à celui du premier mode de réalisation, et constitué d'un cylindre 26 de logement du bâton de fard à lèvres (non représenté) ouvert à une extrémité, et fermé par une tête 28 à l'extrémité opposée. La tête 28 comporte une surface de préhension 30 radiale et un fond 32. Un mécanisme conventionnel (non représenté) permet d'extraire le bâton de fard à lèvres (non représenté) du cylindre de logement 26 lorsqu'un utilisateur saisit la tête 28 et lui fait subir une rotation par rapport au cylindre 26 suivant l'axe géométrique de ce dernier.

L'équipage mobile est formé d'une douille de guidage et de fixation 34, d'un tourniquet intermédiaire cylindrique 82 et d'un prolongateur axial 84. La douille 34 est montée libre en translation et fixe en rotation dans l'étui, et fermée à une extrémité par une cloison intermédiaire 36 séparant un volume de rangement 38 du tube de fard à lèvres et le mécanisme 16. La cloison intermédiaire forme, du côté du volume de rangement, une couronne intérieure 40 de retenue du tube de fard à lèvres 24 et, du côté du mécanisme 16, faisant saillie vers le fond 18 de l'étui, un prolongement axial inférieur cannelé 86 dont l'extrémité axiale forme des rampes 88 en saillie axiale. Le tourniquet 82 présente quatre bossages 90 faisant saillie radiale, conformés en rampes complémentaires, destinées à coopérer d'un côté avec la couronne dentée fixe 78 du fond de l'étui, et de l'autre avec les rampes 88 du prolongement axial 86 de la douille. La face interne du tourniquet 82 est munie, dans sa partie inférieure, de côtes 92 séparées par des cannelures 94. Le prolongateur 84 est pourvu de protubérances radiales 96 coopérant avec les côtes 92 et cannelures 94 du tourniquet, ainsi que de quatre crochets 98 qui viennent s'insérer dans un évidemment de section carrée de la cloison 36 de la douille 34 et permettent ainsi une translation axiale limitée du prolongateur 84 par rapport à la douille 34, sans rotation.

Un ressort de compression 70 est bandé entre l'épaulement de la came 100 de l'étui et la cloison intermédiaire 36 de la douille. Le mécanisme 16 est complété par une came fixe 100 formant une manche cylindrique, pourvue de côtes 102 faisant saillie en direction radiale vers l'intérieur de la came 100 et séparées alternativement par des gorges de guidage du tourniquet 104A, et des gorges de verrouillage 104B. Les extrémités axiales inférieures des côtes 102 sont conformées en rampes 106. Les gorges 104A, 104B ont une partie supérieure de faible profondeur 108A, 108B, destinée à coopérer uniquement avec les côtes du prolongement cannelé de la douille 86, et une partie inférieure de plus grande profondeur 110A, 110B qui coopère non seulement avec les côtes du prolongement cannelé de la douille 86, mais également avec les bossages 90 du tourniquet pour assurer leur guidage axial, les deux parties de profondeurs différentes étant séparées l'une de l'autre par une marche 112A, 112B formant des butées axiales pour les bossages 90. La marche de séparation 112A des gorges de guidage 104A est éloignée du fond 18 de l'étui, de sorte que la partie 110A a une dimension axiale importante. La marche de séparation 112B des gorges de verrouillage 104B est conformée en rampe et située dans le prolongement de la rampe 106 d'une des côtes adjacentes, de sorte que la partie inférieure 110B se trouve très réduite.

Le dispositif fonctionne de la manière suivante:

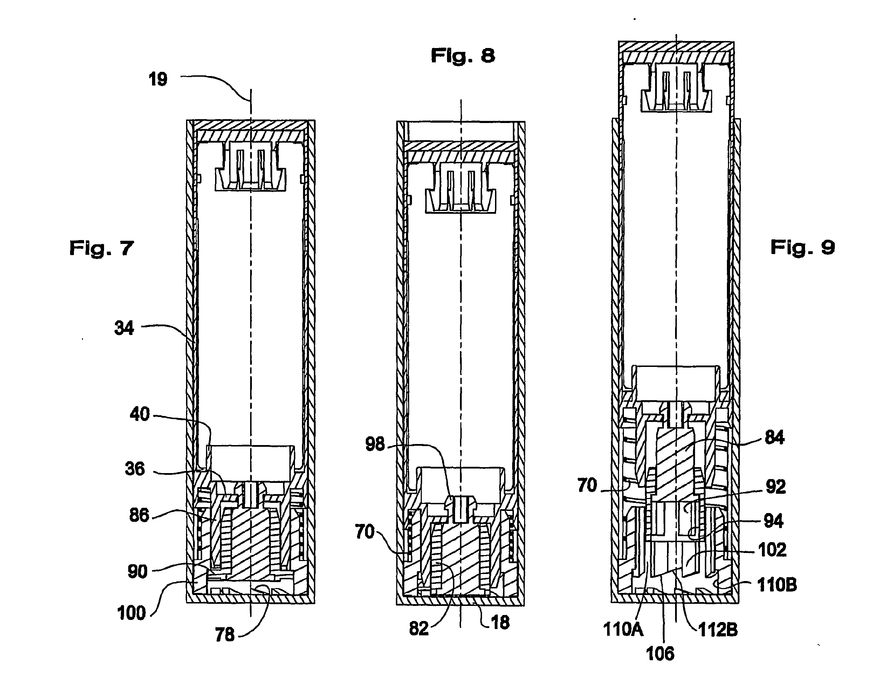

En position de verrouillage, sur la figure 7, le tube 24 est rangé à l'intérieur de l'étui 14. Le ressort 70 est comprimé et tend à éjecter le sous-ensemble mobile 12 constitué du tube 24 et de l'équipage mobile. Toutefois, le tourniquet 82 est positionné de telle manière que les bossages 90 sont situés dans la partie profonde 110B des gorges de verrouillage 104B, en butée axiale avec les marches 112B des gorges de verrouillage 104B de la came fixe 100 et en butée latérale avec les parois latérales de la côte adjacente 102, alors que par ailleurs les protubérances 96 du prolongateur 84 sont en butée axiale sur les côtes 92 du tourniquet.

Lorsque l'utilisateur appuie sur le fond 32 de la tête 28, le sous-ensemble mobile 12 s'enfonce dans l'étui 14. Les rampes 88 du prolongement cannelé 86 de la douille viennent repousser les bossages 90 du tourniquet hors des gorges de verrouillage 104B de sorte que le tourniquet devient libre en rotation. La poursuite du mouvement de translation des rampes 88 provoque une amorce de rotation des bossages 90 et du tourniquet 82 autour de l'axe d'éjection 19, mouvement qui se poursuit lorsque les bossages 90 viennent en prise avec les dents de la couronne dentée 78, jusqu'à ce que les bossages 90 se retrouvent entre deux dents de la couronne fixe 78. Le prolongateur 84 fait alors entretoise entre la douille 34 et le fond 18, et limite le mouvement d'enfoncement de la douille 34, de sorte que le distributeur se retrouve dans la position de la figure 8.

Lorsque l'utilisateur relâche sa pression sur le fond 32 de la tête 38, le ressort 70 repousse la douille 34 qui, après une course morte correspondant au jeu axial des crochets 98, se met à entraîner le prolongateur 84, dont les protubérances 96 sont toujours en butée axiale avec la marche 114 de la côte 92 du tourniquet 82. L'effort d'éjection du ressort 70 est donc transmis aux bossages 90, qui glissent sur les rampes 106 des côtes 102, et s'effacent en provoquant la rotation du tourniquet 82. A l'issue de cette rotation, les bossages 90 se retrouvent dans le prolongement axial des gorges de guidage 104A alors que les cannelures 94 se retrouvent en face des protubérances 96. Le sous-ensemble télescopique formé par le tourniquet 82 et le prolongateur 84 est entraîné en translation par le ressort 70. Le mouvement de l'équipage mobile s'arrête lorsque les bossages 90 rencontrent les marches 112A des gorges de guidage 104A et que les protubérances 96 butent à l'extrémité axiale 116 des cannelures 94. Le tube se trouve alors dans une position de préhension représentée sur la figure 9, permettant son extraction.

Le rangement du tube s'effectue de la manière suivante :

Le tube 24 est inséré dans la douille 34, et repousse celle-ci vers le fond 18 de l'étui. Après une course morte, la douille 34 se met à pousser le prolongateur 84. Le prolongement cannelé 86 de la douille rentre dans la manche de la came fixe 100 et repousse le tourniquet 82 vers le fond de l'étui. Dès que les bossages 90 du tourniquet 82 dépassent l'extrémité axiale inférieure des rampes 106 de la came fixe 100 et que les protubérances 96 du prolongateur sortent des cannelures 92 du tourniquet, le tourniquet 82 redevient libre de tourner et amorce un mouvement de rotation entraîné par les rampes d'extrémité axiale 88 du prolongement cannelé de la douille. Lorsque l'enfoncement du tube se poursuit, les protubérances 96 sont expulsées des cannelures 94 alors que les bossages 90 entrent en contact avec dents de la couronne fixe 78, qui contraignent le tourniquet à poursuivre sa rotation, jusqu'à ce que les bossages 90 se retrouvent à l'aplomb des rampes 106 de la came fixe 100. A l'issue de cette rotation, le prolongateur 84 se retrouve en butée axiale avec l'extrémité 114 des côtes 92 du tourniquet. Le mouvement d'enfoncement est limité par le prolongateur, qui fait entretoise entre la cloison 36 et le fond 18.

Lorsque l'utilisateur relâche sa pression, le ressort 70 repousse l'équipage mobile, le prolongateur 84 transmet les efforts axiaux du ressort 70 au tourniquet 82 et à ses bossages 90, qui glissent le long des rampes 106, jusqu'à pénétrer dans les gorges de verrouillage 104B, en appui sur les rampes 112B. Le mécanisme est alors verrouillé, et le cycle s'achève, le distributeur étant retourné à la position de la figure 7.

Naturellement, diverses modifications sont possibles.

Dans les deux exemples de réalisation, l'étui est à section polygonale, ce qui permet notamment d'assurer un mouvement de translation sans rotation du tube de fard à lèvre par rapport à l'étui. On peut naturellement mettre en oeuvre l'invention avec un étui à section circulaire, auquel cas il peut être nécessaire de prévoir des moyens de guidage axial du tube et/ou de l'équipage mobile par rapport à l'étui.

Le ressort peut être de tout type, notamment de traction ou de compression. Il peut être bandé entre une pièce fixe par rapport à l'étui et une pièce entraînée avec l'équipage mobile.

Dans le premier mode de réalisation, les marches 56, 58, 60, et 62 ne sont pas obligatoires, les pistes peuvent également être de profondeur constante et sur le même plan. Il suffit alors, pour obtenir un guidage unidirectionnel des ergots, de modifier la forme de la came en forme de coeur, d'une manière connue de l'homme du métier.

Le deuxième exemple de réalisation peut être simplifié en éliminant le prolongateur, si la course obtenue s'avère suffisante pour l'application envisagée.

Il est possible de coller une pastille d'inviolabilité en papier auto-collant sur le fond de la tête du tube, la pastille étant munie d'une patte latérale venant se rabattre sur la sur surface radiale extérieure de l'étui.

Les termes « tube de fard à lèvres » sont à prendre dans leur sens générique, et désignent tout dispositif définissant un volume de réception d'un bâton de fard, et muni d'un mécanisme permettant d'extraire ce bâton pour son utilisation. Le tube de fard à lèvres peut également être remplacé par un applicateur sans mécanisme, et sans volume intérieur de réception du bâton de fard, réduit simplement à une tête munie d'une tulipe de fixation d'un bâton de fard. Le tube de fard à lèvre peut également être remplacé par tout type d'applicateur destiné à un usage cosmétique, hygiénique ou pharmaceutique, muni d'une tête munie d'un élément de manoeuvre permettant une prise en main, d'un réservoir pour le produit à appliquer, et de moyens pour extraire le produit de son réservoir. Le produit à appliquer peut d'ailleurs être un produit liquide ou en poudre.

On peut également envisager que le volume de rangement du produit reste dans l'étui, dans une chambre qui peut être fixe ou supporté par l'équipage mobile. Dans cette hypothèse, le tube de fard évoqué dans les exemples précédents est remplacé par un applicateur quelconque, par exemple du type à pinceau, brosse, pipette ou spatule. Il suffit que l'applicateur soit muni d'une tête similaire à la tête 28 des exemples décrits précédemment. Selon une première variante, l'applicateur peut être, dans la position de rangement, en contact avec le produit. Selon une deuxième variante préférée, l'applicateur en position de rangement est séparé de la chambre contenant le produit à appliquer. Ce n'est que lorsque l'on enfonce la tête de l'applicateur que ce dernier entre dans la chambre contenant le produit, alors que le mécanisme de verrouillage se déverrouille et permet l'éjection de l'applicateur.

On peut également appliquer l'invention à un distributeur de liquide, tel qu'un distributeur de parfum, notamment à valve ou à pompe. Selon une première variante, le sous-ensemble mobile est constitué d'un flacon muni d'une buse de distribution du côté opposé au fond et d'un équipage mobile du type décrit précédemment. En appuyant sur le fond, on libère les moyens de verrouillage et le fond du flacon se trouve entraîné dans une position en saillie par rapport à l'étui, de sorte qu'il est possible de saisir le fond du flacon et de l'extraire complètement de l'étui pour accéder à la buse. Selon une deuxième variante, le sous-ensemble mobile est monobloc et n'est pas destiné à sortir de l'étui au-delà de la position en saillie. Le sous-ensemble mobile comporte alors une tête munie par exemple d'une buse radiale et d'un bouton de manoeuvre diamétralement opposé à la buse, permettant de commander une valve ou une pompe. De préférence, le bouton de manoeuvre devrait être manoeuvré par pression dans une direction perpendiculaire à l'axe de l'étui, par exemple une direction radiale correspondant à l'axe d'éjection radial de la buse, de manière à ne pas interférer avec les mouvements axiaux du sous-ensemble mobile par rapport à l'étui.

Dans les exemples de réalisation, le mouvement purement axial du tube est transmis au mécanisme de verrouillage 16 dont un élément est déplacé suivant un mouvement ayant une composante non axiale. Cette transformation de mouvement axial en mouvement latéral peut être obtenue par tout moyen.

## Revendications

1. - Distributeur (10) de produit cosmétique, hygiénique ou pharmaceutique, comportant :
- un étui tubulaire (14) définissant un axe géométrique d'éjection (19) et un sens axial d'éjection (20);
- un sous-ensemble mobile (12) par rapport à l'étui et comportant un fond (32) et un élément de manoeuvre (30), le sous-ensemble mobile dans une position de rangement étant entièrement logé à l'intérieur de l'étui (14) de telle manière que l'élément de manoeuvre (30) est inaccessible ;
- un volume de logement du produit défini dans l'étui (14) et/ou le sous-ensemble mobile (12) ; et
- des moyens de verrouillage qui, dans un état de verrouillage, interdisent tout mouvement du sous-ensemble mobile (12) en position de rangement par rapport à l'étui dans le sens d'éjection et, dans un état de déverrouillage, libèrent le sous-ensemble mobile et permettent un mouvement du sous-ensemble mobile par rapport à l'étui dans le sens de l'éjection au moins jusqu'à une position en saillie dans laquelle l'élément de manoeuvre fait saillie à l'extérieur de l'étui et est accessible, les moyens de verrouillage passant de l'état de verrouillage à l'état de déverrouillage lorsque le fond (32) du sous-ensemble de mobile est enfoncé par un utilisateur dans le sens axial opposé au sens axial d'éjection, de la position de rangement à une position enfoncée.

2. - Distributeur selon la revendication 1, dans lequel le sous-ensemble mobile est guidé par rapport à l'étui de telle manière que l'enfoncement du fond (32) du sous-ensemble de mobile est un mouvement de translation sans rotation par rapport à l'étui (14).

3. - Distributeur selon la revendication 1 ou la revendication 2, comportant en outre des moyens d'entraînement (70) du sous-ensemble mobile, dans le sens d'éjection, de la position enfoncée vers la position en saillie.

4. - Distributeur selon la revendication 3, dans lequel les moyens d'entraînement comportent un ressort de compression (70) rappelant le sous-ensemble mobile (12) dans le sens d'éjection.

5. - Distributeur selon la revendication 3 ou la revendication 4, comportant en outre des moyens de freinage (35) du mouvement du sous-ensemble mobile (12) dans le sens de l'éjection.

6. - Distributeur selon l'une quelconque des revendications précédentes, dans lequel le sous-ensemble mobile (12) comporte :
- un applicateur (24) du produit, définissant le volume de logement du produit, et pourvu du fond (32) du sous-ensemble de mobile ; et
- un équipage mobile (22) disposé à l'intérieur de l'étui (14) et muni de moyens de retenue (40) de l'applicateur (24) par rapport à l'équipage mobile (22).

7. - Distributeur selon la revendication 6, comportant en outre une butée de fin de course (112A) interdisant tout mouvement axial de l'équipage mobile (22) par rapport à l'étui (14) dans le sens d'éjection au-delà de la position prise par l'équipage mobile (22) lorsque le sous-ensemble mobile (12) est dans la position en saillie.

8. - Distributeur selon la revendication 7, dans lequel les moyens de retenue sont tels qu'ils libèrent l'applicateur (24) lorsque le sous-ensemble mobile (12) est dans la position en saillie et qu'est exercée sur le fond (32) du sous-ensemble mobile une force axiale dans le sens d'éjection.

9. - Distributeur selon l'une quelconque des revendications précédentes, dans lequel les moyens de verrouillage comportent au moins deux pièces mobiles ayant un mouvement relatif télescopique.

10. - Distributeur selon l'une quelconque des revendications précédentes, dans lequel l'équipage mobile (22) est monobloc.

11. - Distributeur selon l'une quelconque des revendications précédentes, dans lequel les moyens de verrouillage comportent au moins un élément mobile coopérant avec une butée dans l'état verrouillé des moyens de verrouillage, l'élément mobile et la butée ayant un mouvement relatif de dégagement comportant une composante non axiale lorsque les moyens de verrouillage passent de l'état de verrouillage à l'état de déverrouillage.

12. - Distributeur selon la revendication 11, dans lequel la butée est solidaire de l'étui et l'élément mobile est solidaire du sous-ensemble mobile.

13. - Distributeur selon la revendication 12, dans lequel la butée est fixe par rapport à l'étui.

14. - Distributeur selon l'une quelconque des revendications 11 à 13, dans lequel les moyens de verrouillage comportent mécanisme à came, produisant le mouvement relatif de dégagement lorsque le sous-ensemble mobile passe de la position de rangement à la position enfoncée.

15. - Distributeur selon l'une quelconque des revendications 11 à 13, dans lequel le mécanisme à came comporte une came (44) ayant un profil fermé.

16. - Distributeur selon l'une quelconque des revendications précédentes, dans lequel l'étui est fermé à une extrémité axiale par un fond d'étui (18) et comporte à l'autre extrémité axiale une ouverture qui est obturée par le fond (32) du sous-ensemble mobile en position de rangement, le sens axial d'éjection (20) allant du fond d'étui vers l'ouverture.

## Claims

1. Dispenser (10) for a cosmetic, hygienic or pharmaceutical product, comprising:
- a tubular case (14) defining a geometrical axis of ejection (19) and an axial direction of ejection (20);
- a sub-assembly (12) mobile in relation to the case and comprising a bottom (32) and an operating device (30), the mobile sub-assembly being entirely housed inside the case (14) when in the stored position in such a way that the operating device (30) cannot be accessed;
- a volume containing the product defined in the case (14) and/or the mobile sub-assembly (12); and
- locking means which, when in locked state, prevent any movement of the mobile sub-assembly (12) in stored position in relation to the case in the direction of ejection and, in unlocked state, release the mobile sub-assembly and allow the mobile sub-assembly to move in relation to the case in the direction of ejection at least into a protruding position in which the operating device protrudes from the case and can be accessed, the locking means passing from the locking state to the unlocking state when the bottom (32) of the mobile sub-assembly is depressed by a user in the axial direction opposite the axial direction of ejection, from the stored position to a depressed position.

2. Dispenser according to claim 1, wherein the mobile sub-assembly is guided in relation to the case in such a way that the depression of the bottom (32) of the mobile sub-assembly is a translational movement with no rotation in relation to the case (14).

3. Dispenser according to claim 1 or claim 2, also comprising means (70) of driving the mobile sub-assembly, in the direction of ejection, from the depressed position to the protruding position.

4. Dispenser according to claim 3, wherein the driving means comprise a compression spring (70) resetting the mobile sub-assembly (12) in the direction of ejection.

5. Dispenser according to claim 3 or claim 4, also comprising means (35) of slowing the movement of the mobile sub-assembly (12) in the direction of ejection.

6. Dispenser according to any one of the preceding claims, wherein the mobile sub-assembly (12) comprises:
- a product applicator (34), defining the volume containing the product, and equipped with the bottom (32) of the mobile sub-assembly; and
- a moving part (22) arranged inside the case (14) and equipped with means (40) of restraining the applicator (24) in relation to the moving part (22).

7. Dispenser according to claim 6, also comprising an end-of-travel stop (112A) preventing any axial movement of the moving part (22) in relation to the case (14) in the direction of ejection beyond the position taken by the moving part (22) when the mobile sub-assembly (12) is in the protruding position.

8. Dispenser according to claim 7, wherein the restraining means can release the applicator (24) when the mobile sub-assembly (12) is in the protruding position and when an axial force is exerted on the bottom (32) of the mobile sub-assembly in the direction of ejection.

9. Dispenser according to any one of the preceding claims, wherein the locking means comprise at least two mobile parts with a relative telescopic movement.

10. Dispenser according to any one of the preceding claims, wherein the moving part (22) is made as a single piece.

11. Dispenser according to any one of the preceding claims, wherein the locking means comprise at least one mobile element cooperating with a stop when the locking means are in locked state, the mobile element and the stop having a relative disengagement movement comprising a non-axial component when the locking means pass from the locked state into the unlocked state.

12. Dispenser according to claim 11, wherein the stop is solidly attached to the case and the mobile element is solidly attached to the mobile sub-assembly.

13. Dispenser according to claim 12, wherein the stop is fixed in relation to the case.

14. Dispenser according to any one of the claims from 11 to 13, wherein the locking means comprise a cam mechanism which causes the relative disengagement movement when the mobile sub-assembly passes from the stored position to the depressed position.

15. Dispenser according to any one of the claims from 11 to 13, wherein the cam mechanism comprises a cam (44) having a closed profile.

16. Dispenser according to any one of the preceding claims, wherein the case is closed at one axial end by a case bottom (18) and comprises an opening on the other axial end, which is blocked by the bottom (32) of the mobile sub-assembly in the stored position, the axial direction of ejection (20) going from the bottom of the case towards the opening.

## Patentansprüche

1. Spender (10) eines kosmetischen, hygienischen oder pharmazeutischen Produkts, das Folgendes umfasst:
- ein eine geometrische Auswurfachse (19) und eine axiale Auswurfrichtung (20) umfassendes röhrenförmiges E-tui (14);
- eine im Verhältnis zum Etui und einen Boden (32) und ein Handhabungselement (30) umfassende mobile Unterstruktur (12), wobei die mobile Unterstruktur in einer verstauten Position vollständig im Innern des Etuis (14) derart untergebracht ist, dass das Handhabungselement (30) unzugänglich ist;
- ein im Etui (14) und / oder der mobilen Unterstruktur (12) definiertes Aufnahmevolumen; und
- Verriegelungsmittel, die in einer verstauten Position im Verhältnis zum Etui in der Auswurfrichtung in einem verriegelten Zustand jede Bewegung der mobilen Unterstruktur (12) verbieten und in einem entriegelten Zustand die mobile Unterstruktur freisetzen und eine Bewegung der mobilen Unterstruktur im Verhältnis zum Etui in der Richtung des Auswurfs wenigstens bis zu einer hervorstehenden Position erlauben, in der das Handhabungselement an der Außenseite des Etuis hervorsteht und zugänglich ist, wobei die Verriegelungsmittel vom verriegelten Zustand in den entriegelten Zustand übergehen, wenn der Boden (32) der mobilen Unterstruktur durch einen Benutzer in der axialen Richtung entgegen der Auswurfrichtung von der verstauten Position in eine eingedrückte Position eingedrückt wird.

2. Spender gemäß Anspruch 1, in dem die mobile Unterstruktur im Verhältnis zum Etui derart geführt wird, dass das Eindrücken des Bodens (32) der mobilen Unterstruktur eine Translationsbewegung ohne Drehung im Verhältnis zum Etui (14) ist.

3. Spender gemäß Anspruch 1 oder 2, der darüber hinaus Antriebsmittel (70) der mobilen Unterstruktur in der Auswurfrichtung der eingedrückten Position in Richtung der hervorstehenden Position umfasst.

4. Spender gemäß Anspruch 3, in dem die Antriebsmittel eine die mobile Unterstruktur (12) in der Auswurfrichtung zurückholende Kompressionsfeder (70) umfassen.

5. Spender gemäß Anspruch 3 oder 4, die darüber hinaus Bremsmittel (35) der Bewegung der mobilen Unterstruktur (12) in der Auswurfrichtung umfasst.

6. Spender gemäß einem der vorherigen Ansprüche, in dem die mobile Unterstruktur (12) Folgendes umfasst:
- einen das Aufnahmevolumen des Produkts definierenden und mit dem Boden (32) der mobilen Unterstruktur ausgerüsteten Applikator (24) des Produkts; und
- eine im Innern des Etuis (14) angeordnete und mit Rückhaltemitteln (40) des Applikators (24) im Verhältnis zur mobilen Ausrüstung (22) versehene mobile Ausrüstung (22).

7. Spender gemäß Anspruch 6, der darüber hinaus einen jede axiale Bewegung der mobilen Ausrüstung (22) im Verhältnis zum Etui (14) in der Auswurfrichtung über die von der mobilen Ausrüstung (22) eingenommene Position hinaus verbietenden Endanschlag (112A) umfasst, wenn sich die mobile Unterstruktur (12) in der hervorstehenden Position befindet.

8. Spender gemäß Anspruch 7, in dem die Rückhaltemittel derart sind, dass sie den Applikator (24) freisetzen, wenn die mobile Unterstruktur (12) sich in der hervorstehenden Position befindet, und wenn auf den Boden (32) der mobilen Unterstruktur eine axiale Kraft in der Auswurfrichtung ausgeübt wird.

9. Spender gemäß einem der vorherigen Ansprüche, in dem die Verriegelungsmittel wenigstens zwei mobile Stücke mit einer relativen teleskopischen Bewegung umfassen.

10. Spender gemäß einem der vorherigen Ansprüche, in dem die mobile Ausrüstung (22) aus einem Stück besteht.

11. Spender gemäß einem der vorherigen Ansprüche, in dem die Verriegelungsmittel wenigstens ein mit einem Anschlag im verriegelten Zustand der Verriegelungsmittel zusammenwirkendes mobiles Element umfassen, wobei das mobile Element und der Anschlag eine relative Freisetzungsbewegung mit einer nicht axialen Komponente haben, wenn die Verriegelungsmittel vom verriegelten Zustand in den entriegelten Zustand übergehen.

12. Spender gemäß Anspruch 11, in dem der Anschlag mit dem Etui fest verbunden ist und das Verriegelungselement fest mit der mobilen Unterstruktur verbunden ist.

13. Spender gemäß Anspruch 12, in dem der Anschlag im Verhältnis zum Etui fest ist.

14. Spender gemäß Anspruch 11 bis 13, in dem die Verriegelungsmittel einen Nockenmechanismus umfassen, der die relative Freisetzungsbewegung hervorruft, wenn die mobile Unterstruktur von der verstauten Position in die eingedrückte Position übergeht.

15. Spender gemäß Anspruch 11 bis 13, in dem der Nockenmechanismus eine Nocke (44) mit einem geschlossenen Profil umfasst.

16. Spender gemäß einem der vorherigen Ansprüche, in dem das Etui an einem axialen Ende durch einen Etuiboden (18) verschlossen ist und am anderen axialen Ende eine Öffnung umfasst, die durch den Boden (32) der mobilen Unterstruktur in der verstauten Position verschlossen wird, wobei die axiale Auswurfrichtung (20) vom Boden des Etuis zur Öffnung reicht.
